Europäisches Patentamt

European Patent Office

Office européen des brevets

(19)

(11) Publication number: **0 269 348 B1**

(12) # EUROPEAN PATENT SPECIFICATION

(45) Date of publication of patent specification: **22.01.92** (51) Int. Cl.⁵: **B60N 2/02**

(21) Application number: **87310123.2**

(22) Date of filing: **17.11.87**

(54) Tilt control mechanism.

(30) Priority: **18.11.86 GB 8627507**

(43) Date of publication of application:
**01.06.88 Bulletin 88/22**

(45) Publication of the grant of the patent:
**22.01.92 Bulletin 92/04**

(84) Designated Contracting States:
**DE ES FR GB IT**

(56) References cited:
**DE-A- 2 802 373
DE-A- 3 504 166
GB-A- 1 575 797**

(73) Proprietor: **I.H.W. Engineering Limited
Stratford Road
Warwick CV34 6AL(GB)**

(72) Inventor: **Holloway, Ian
c/o I.H.W.Engineering Ltd. Stratford Road
Warwick CV34 6AL(GB)**
Inventor: **Banks, John
c/o I.H.W.Engineering Ltd. Stratford Road
Warwick CV34 6AL(GB)**
Inventor: **Aiken, Cliff
c/o I.H.W.Engineering Ltd. Stratford Road
Warwick CV34 6AL(GB)**

(74) Representative: **Dealtry, Brian et al
Eric Potter & Clarkson St. Mary's Court St.
Mary's Gate
Nottingham NG1 1LE(GB)**

Rank Xerox (UK) Business Services

EP 0 269 348 B1

## Description

The present invention relates to a tilt control mechanism particularly suitable for use in a vehicle seat.

In certain vehicle arrangements, such as a motor car having only two access doors, it is necessary for the back of a seat to tilt relative to the cushion of the seat. For such seats, the seat back is hingedly connected to the seat cushion by a hinged connection and a tilt control mechanism is provided to releasably hold the seat back in an upright position, the control mechanism on actuation releasing said hold to enable the seat back to tilt freely about said hinge connection, usually in a forward direction of the seat.

Conventionally such a tilt control mechanism includes a latch in the form of a hook which engages with a bolt, the latch being located on the seat or back and the bolt being located on the back or seat respectively.

The latch is usually biased to a bolt engaging position and the hook is provided with a bolt engaging surface which is so shaped as to tend to move the hook towards its bolt engaging position should a load be applied to the seat back which tends to tilt the back forwardly of the seat cushion. Whilst such an arrangement is desirable for restraining unintentioned release of the latch from the bolt by a load applied forwardly to the seat back it can hinder operation of the latch when intentional tilting is required. In this respect, it is necessary for the latch to be moved to a fully retracted position prior to tilting movement of the seat back otherwise a partially retracted latch will contact the bolt and the tilting movement will cause the latch to fully re-engage the bolt. This often renders operation of such tilt control mechanism awkward.

DE-A-3504166 discloses a tilt control mechanism for co-operation with a pair of pivotally connected elements for releasably holding said elements at a predetermined relative angular position, the tilt control mechanism comprising a latch member pivotally mounted on one of said elements for co-operation with a bolt mounted on the other of said elements, the latch member having a recess for accommodating the bolt, the latch member being movable between a bolt engaging position and a bolt release position, the bolt being located in said recess when said latch member is in said bolt engaging position such that the pair of elements are held in said predetermined angular position, biasing means for biasing the latch member to said bolt release position, and releasable lock means co-operable with the latch member to hold the latch member in said bolt engaging position, whereby the resess has a bottom portion and a pair of opposed side portions. In such an arrangement play can occur between the bolt and the latch member due to wear or manufacturing tolerances and so cause undesirable play between the pivotally connected elements.

According to the present invention there is provided a tilt control mechanism for co-operation with a pair of pivotally connected elements for releasably holding said elements at a predetermined relative angular position, the tilt control mechanism comprising a latch member pivotally mounted on one of said elements for co-operation with a bolt mounted on the other of said elements, the latch member having a recess for accommodating the bolt, the latch member being movable between a bolt engaging position and a bolt release position, the bolt being located in said recess when said latch member is in said bolt engaging position such that the pair of elements are held in said predetermined angular position, biasing means for biasing the latch member to said bolt release position, and releasable lock means co-operable with the latch member to hold the latch member in said bolt engaging position whereby the recess has a bottom portion and a pair of opposed side portions, characterised in that the side portion being concave and defining a seat for said bolt when the latch member is in its bolt engaging position, the releasable lock means comprising a cam rotatably mounted on said one element, the latch member having a cam surface along which the cam rides, the cam being arranged to be rotatable to ride along the cam surface between latch member lock and unlock positions, biasing means being provided to bias the cam to said lock position whereat said latch member is held in said bolt engaging position.

Various aspects of the present invention are hereinafter described with reference to the accompanying drawings, in which:-

Figure 1 is a schematic side view of part of a seat frame illustrating the tilt control mechanism in its hold condition; and

Figure 2 is a view similar to Figure 1 showing the tilt control mechanism in its release condition.

Illustrated in the drawings is a lower part of a seat back 12 hingedly connected to a rear part of a seat cushion 14 for pivotal movement about a pivot axis 16. The seat back 12 is illustrated in an upright position which is its normal position when a person is seated on the seat. The seat back 12 is tiltable about said pivot axis in a forwards direction (ie clockwise about said pivot axis 16).

Such tiltable movement from the upright position is prevented or permitted by a tilt control mechanism 20. The mechanism illustrated includes a latch member 22 which is pivotally attached to the seat back 12 for pivotal movement about pivot axis 26.

The latch member 22 includes a hook portion 28 having a recess 30 for accommodating a bolt 32 secured to the seat cushion 14. When the bolt 32 is located within the recess 30 the seat back 12 is prevented from tilting forwardly. Preferably the hook portion 28 includes a concave seat portion 34 for engaging the rear face of bolt 32 such that forward loadings on the seat back 12 do not tend to urge movement of the latch member 22 about its pivot axis 26. Preferably the contour of recess 30 is chosen such that the spacing between seat portion 34 and the opposed face 36 of the recess 30 results in a close fit between the bolt 32 and recess 30. Thus when the latch member 22 is engaged on the bolt 32 the back 12 is held in position relative to cushion 14 with little or no movement about axis 16.

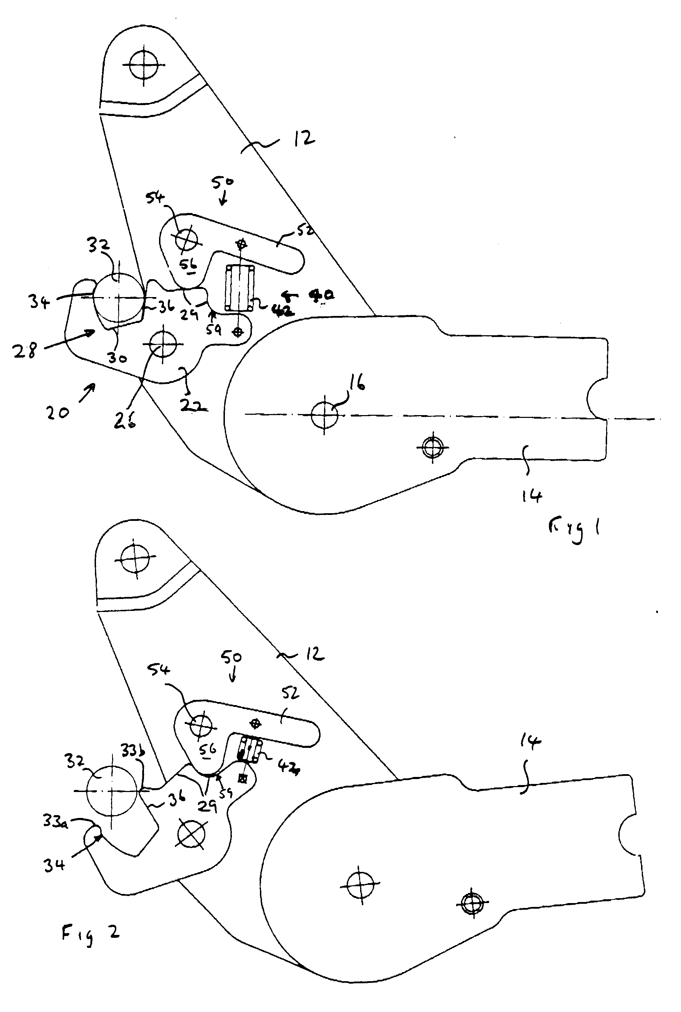

Biasing means 40 are provided, preferably in the form of a spring 42 for biasing the latch member 22 about pivot axis 26 to a fully retracted bolt release position whereat the recess 30 resides in a position clear of the bolt 32 as illustrated in Figure 2. In this position of the latch member 22 the back 12 is freely tiltable in the forwards direction.

The latch member 22 is held in its bolt engaging position illustrated in Figure 1 by lock means in the form of cam means 50 in the form of a lever 52 pivotally connected to the seat back 12 for movement about a pivotal axis 54. The lever 52 includes a cam portion 56 which engages a cam surface portion 29 on the latch member 22. In this condition the cam portion is in a latch member lock position such that the latch member 22 cannot move to its release position. The lever 52 is maintained in this lock position by biasing means which in the illustrated embodiment preferably comprises spring 42.

If lever 52 is rotated in an anti-clockwise direction about pivot axis 54 to a latch member unlock position, say by a cable or similar linkage attached to lever 52, the cam portion 56 moves forwardly relative to the latch member 22 and enters recess 59 thereby permitting the latch member to rotate about pivot axis 26 to its fully retracted bolt release position under bias of spring 42.

It will be appreciated that the lever 52 has only to be moved a relatively short distance before the bias of spring 42 operates to move the latch member 22 to its bolt release position. In addition, the rear terminal end of recess 30 is provided with a convex portion 33a which serves to engage bolt 32 to urge the latch member toward its release position once the latch member has begun its movement toward the bolt release position.

The latch member 22 is automatically re-engaged with the bolt 32 when the back 12 is returned to its upright position. In this respect it will be seen in Figure 2 that the forward terminal end 33b of recess 30 will engage the bolt 32 as the back 12 is tilted rearwardly and such engagement causes the latch member 22 to rotate clockwise about its pivot axis 26 against the bias of spring 42. During such movement, the cam portion 56 on lever 52 moves rearwardly relative to the latch member and rides out of recess 59 and onto cam surface 29 to eventually reach its latch lock position as illustrated in Figure 1.

## Claims

1. A tilt control mechanism for co-operation with a pair of pivotally connected elements (12,14) for releasably holding said elements at a predetermined relative angular position, the tilt control mechanism comprising a latch member (22) pivotally mounted on one of said elements for co-operation with a bolt (32) mounted on the other of said elements, the latch member having a recess (30) for accommodating the bolt, the latch member being movable between a bolt engaging position and a bolt release position, the bolt being located in said recess when said latch member is in said bolt engaging position such that the pair of elements are held in said predetermined angular position, biasing means (40) for biasing the latch member to said bolt release position, and releasable lock means (50) co-operable with the latch member to hold the latch member in said bolt engaging position, whereby the recess has a bottom portion and a pair of opposed side portions (34,36), characterised in that the side portion (34) being concave and defining a seat for said bolt when the latch member is in its bolt engaging position, the releasable lock means (50) comprising a cam (56) rotatably mounted on said one element, the latch member having a cam surface (29) along which the cam (56) rides, the cam being arranged to be rotatable to ride along the cam surface (29) between latch member lock and unlock positions, biasing means (42) being provided to bias the cam to said lock position whereat said latch member is held in said bolt engaging position.

2. A tilt control mechanism according to Claim 1, characterised in that the cam is operated by a lever (52) and a spring (42) is located between said lever and said latch member to provide said bias for both the cam and the latch member.

3. A tilt control mechanism according to Claim 2, characterised in that the cam surface on the latch member includes a recess (59) in which the cam is seated when the latch member is in said bolt release position, the cam being capable of riding out of the recess and moved to its lock position on movement of the latch member to its bolt engaging position.

4. A tilt control mechanism according to any preceding claim, characterised in that a side (36) of said recess for said bolt is arranged to contact said bolt on movement of said elements to said predetermined angular position so as to move the latch member from its bolt release position to its bolt engaging position.

5. A vehicle seat having a back and a cushion pivotally connected to one another and a tilt control mechanism according to any preceding claim attached thereto for releasably holding the back and cushion in a predetermined relative angular position.

## Revendications

1. Appareil de commande d'inclinaison servant à coopérer avec une paire d'éléments reliés de façon pivotante (12, 14) pour la retenue de façon libérable de ces éléments sur une position angulaire relative prédéterminée, l'appareil de commande d'inclinaison comprenant un élément de verrou (22) monté de façon pivotante sur l'un des éléments pour la coopération avec un axe (32) monté sur l'autre élément, l'élément de verrou comportant un évidement (30) pour loger l'axe, l'élément de verrou pouvant se déplacer entre une position d'engagement d'axe et une position de libération d'axe, l'axe étant situé dans le logement lorsque l'élément de verrou se trouve dans la position d'engagement d'axe de telle sorte que la paire d'éléments est maintenue dans la position angulaire prédéterminée, des moyens de précontrainte (40) servant à solliciter l'élément de verrou sur la position de libération d'axe, et des moyens de blocage libérables (50) pouvant coopérer avec l'élément de verrou pour maintenir l'élément de verrou dans la position d'engagement d'axe, le logement ayant une portion de fond et une paire de portions latérales opposées (34, 36), caractérisé en ce que la portion latérale (34) est concave et définit un siège pour l'axe lorsque l'élément de verrou est dans sa position d'engagement d'axe, les moyens de blocage libérable (50) comprenant une came (56) montée de façon rotative sur un des éléments, l'élément de verrou comportant une surface de came (29) le long de laquelle se déplace la came (56), cette dernière étant agencée de façon à pouvoir être mise en rotation pour se déplacer sur la surface de came (29) entre les positions de blocage d'élément de verrou et les positions de déblocage, des moyens de précontrainte (42) étant prévus pour solliciter la came sur la position de blocage sur laquelle l'élément de verrouillage est maintenu dans la position d'engagement d'axe.

2. Appareil de commande d'inclinaison selon la revendication 1, caractérisé en ce que la came est actionnée par un levier (52) et un ressort (42) est situé entre le levier et l'élément de verrou pour assurer la sollicitation à la fois pour la came et l'élément de verrouillage.

3. Appareil de commande d'inclinaison selon la revendication 2, caractérisé en ce que la surface de came sur l'élément de verrouillage comprend un évidement (59) dans lequel est logée la came lorsque l'élément de verrouillage est dans la position de libération d'axe, la came pouvant sortir du logement et être déplacée sur sa position de blocage lors du mouvement de l'élément de verrouillage jusqu'à sa position d'engagement d'axe.

4. Appareil de commande d'inclinaison selon l'une quelconque des revendications précédentes, caractérisé en ce qu'un côté (36) de l'évidement pour l'axe est agencé de façon à mettre en contact l'axe lors du mouvement de l'élément jusqu'à la position angulaire prédéterminée de façon à déplacer l'élément de verrou depuis sa position de libération d'axe jusqu'à sa position d'engagement d'axe.

5. Siège de véhicule comportant un dossier et un coussin de siège reliés de façon pivotante entre eux et un appareil de commande d'inclinaison selon l'une quelconque des revendications précédentes fixé sur ceux-ci pour la retenue de façon libérable du dossier et du coussin de siège dans une position angulaire relative prédéterminée.

## Patentansprüche

1. Neigungsverstellmechanismus, der mit zwei schwenkbar verbundenen Elementen (12, 14) zusammenwirkt, um diese Elemente lösbar in einer vorbestimmten relativen Winkelstellung (zueinander) zu halten, umfassend ein schwenkbar am einen der Elemente montiertes, mit einem am anderen der Elemente angebrachten Bolzen (32) zusammenwirkendes Verriegelungsglied (22), das eine Aussparung (30) zum Aufnehmen des Bolzens aufweist und das zwischen einer Bolzeneingreifstellung und einer Bolzenausrückstellung bewegbar ist, wobei sich der Bolzen in der Aussparung befindet, wenn sich das Verriegelungsglied in der Bolzeneingreifstellung befindet, so daß die beiden Elemente in der vorbestimmten Winkelstellung gehalten sind, eine Vorbelastungseinheit (40) zum Vorbelasten des Verriegelungsglieds in die Bolzenausrückstellung und eine auslösbare Sperreinheit (50), die mit dem Verriegelungsglied zusammenzuwirken vermag, um das Verriegelungsglied in der Bolzeneingreifstellung zu halten, wobei die Aussparung einen Bodenteil und zwei gegenüberstehende Seitenteile (34, 36) aufweist, dadurch gekennzeichnet, daß der Seitenteil (34) konkav ist und einen Sitz für den Bolzen, wenn sich das Verriegelungsglied in seiner Bolzeneingreifstellung befindet, festlegt, die lösbare Sperreinheit (50) einen drehbar an dem einen Element montierten oder gelagerten Nocken (56) aufweist, das Verriegelungsglied eine Kurvenfläche (29), auf welcher der Nocken (56) entlangläuft, aufweist, der Nocken drehbar angeordnet ist, um längs der Kurvenfläche (29) zwischen Verriegelungsglied-Sperr-und - Entsperrstellungen abzulaufen, (und) eine Vorbelastungseinheit (42) vorgesehen ist, um den Nocken in die Sperrstellung vorzubelasten, in welcher das Verriegelungsglied in der Bolzeneingreifstellung gehalten ist.

2.  Neigungsverstellmechanismus nach Anspruch 1, dadurch gekennzeichnet, daß der Nocken mittels eines Hebels (52) betätigbar ist und zwischen dem Hebel und dem Verriegelungsglied eine Feder (42) zur Gewährleistung der Vorbelastung für sowohl den Nocken als auch das Verriegelungsglied angeordnet ist.

3.  Neigungsverstellmechanismus nach Anspruch 1, dadurch gekennzeichnet, daß die Kurvenfläche am Verriegelungsglied eine Aussparung (59) aufweist, in welcher der Nocken sitzt, wenn sich das Verriegelungsglied in der Bolzenausrückstellung befindet, (und) der Nocken bei der Bewegung des Verriegelungsglieds in seine Bolzeneingreifstellung aus der Aussparung herauszulaufen vermag und in seine Sperrstellung bewegbar ist.

4.  Neigungsverstellmechanismus nach einem der vorangehenden Ansprüche, dadurch gekennzeichnet, daß eine Seite (36) der Aussparung für den Bolzen so angeordnet ist, daß sie bei Bewegung der beiden Elemente in die vorbestimmte Winkelstellung am Bolzen angreift, um (dabei) das Verriegelungsglied aus seiner Bolzenausrückstellung in seine Bolzeneingreifstellung zu bewegen.

5.  Fahrzeugsitz mit Rückenlehne und Sitzpolster, die schwenkbar miteinander verbunden sind, und einem daran angebrachten Neigungsverstellmechanismus nach einem der vorangehenden Ansprüche zum lösbaren Halten von Rückenlehne und Sitzpolster in einer vorbestimmten relativen Winkelstellung.

Fig 1

Fig 2